# EUROPÄISCHE PATENTSCHRIFT

(11) **EP 2 986 771 B1**
(45) Veröffentlichungstag und Bekanntmachung des Hinweises auf die Patenterteilung: **19.02.2020**
(21) Anmeldenummer: 14723342.3
(22) Anmeldetag: 15.04.2014
(51) Int. Cl.: D06M 15/03, B01D 39/00, B01D 69/00, C02F 1/00, D06M 15/356, D06M 15/61, C08J 5/00, B01D 43/00

(54) **VERWENDUNG VON GEBUNDENEN POLYELEKTROLYTEN ZUR ADSORPTION VON METALLKATIONEN**
USE OF BONDED POLYELECTROLYTES FOR ADSORPTION OF METAL CATIONS
UTILISATION DE POLYÉLECTROLYTES LIÉS POUR L'ADSORPTION DE CATIONS MÉTALLIQUES

(30) Priorität: 15.04.2013 DE 102013006433
(43) Veröffentlichungstag der Anmeldung: 24.02.2016
(73) Patentinhaber: DTNW Deutsches Textilforschungszentrum Nord-West gemeinnützige GmbH, 47798 Krefeld (DE)
(72) Erfinder: OPWIS, Klaus, 47623 Kevelaer (DE); MAYER-GALL, Thomas, 47475 Kamp-Lintfort (DE); ERICH, Egon, 47475 Kamp-Lintfort (DE); GUTMANN, Stefan, 47803 Krefeld (DE); GRÜNING, Frank, 45663 Recklinghausen (DE); KUBE, Christine, 47239 Duisburg (DE)
(74) Vertreter: Schneiders, Josef
(86) Internationale Anmeldenummer: PCT/EP2014/057622
(87) Internationale Veröffentlichungsnummer: WO 2014/170326

(56) Entgegenhaltungen:
- EP-A2- 0 111 714
- WO-A1-2013/053473
- WO-A2-97/02077

## Beschreibung

Die Erfindung betrifft die Verwendung eines polymeren Trägermaterials mit einer Ausrüstung von daran fixierten Polyelektrolyten, das geeignet ist, ein- und zweiwertige Metallkationen zu adsorbieren, zur Bindung von ein- oder zweiwertigen Metallkationen aus wässrigen Lösungen.

Bei der Oberflächenbehandlung metallischer und nichtmetallischer Werkstoffe fallen in den Betrieben metallhaltige Reststofflösungen in Form von Konzentraten, Halbkonzentraten und Spülwässern an. Diese enthalten zum Teil beträchtliche Mengen an hochpreisigen Industriemetallen und Edelmetallen wie Palladium, Platin oder Silber. Oft stehen Störstoffe wie Komplexbildner einer reibungslosen Verwertung entgegen, zudem liegen insbesondere die Edelmetalle zumeist nur in geringer Konzentration vor, was eine weiterführende Aufarbeitung zusätzlich erschwert.

Aus der WO 97/02077 A2 geht ein Filtermaterial mit einem polymeren Träger und einen daran fixierten Polyelektolyten zur Bindung von Festkörperteilchen hervor. Die EP 0 111 714 beschreibt eine Ultrafiltrationsmembran, die geeignet ist, zwischen gelösten Ionen und größeren Agglomeraten zu unterscheiden. Zu einer Abscheidung von Ionen kommt es nicht.

Es besteht deshalb ein Bedarf an Methoden, mit denen Wertmetalle aus metallhaltigen wässrigen Lösungen, auch Abwässern, gebunden und einer weiteren Verwertung zur Verfügung gestellt werden können.

Polymere Materialien bzw. Trägermaterialien sind Materialien aus einem polymeren Werkstoff, der in der Regel als Folie, Film oder Membran vorliegt. Bevorzugte polymere Trägermaterialien sind textile Materialien, die eine deutlich größere Oberfläche aufweisen, als polymere Folien und Filme. Als polymere

Trägermaterialien kommen im Grunde genommen beliebige Materialien aus polymerisierbaren monomeren Substanzen in Frage.

Textile Materialien bestehen in der Regel aus natürlichen oder synthetischen faserbildenden Polymeren, wie z.B. aus den Naturfasern Baumwolle und Leinen bzw. den Synthesefasern Polyester und Polyamid, die sich aufgrund der Art und Anzahl ihrer funktionellen Gruppen auf der Oberfläche nur bedingt zur Adsorption von Metallkationen eignen.

Polyelektrolyte sind organische Verbindungen, die sich aufgrund ihrer funktionellen Gruppen in wässrigen Lösungen als Säure bzw. Base verhalten können. Aminofunktionalisierte Polyelektrolyte können Metallkationen über ionische Wechselwirkungen bzw. Komplexbildung reversibel binden.

Polyvinylamin ist ein synthetisches Polymer. Es ist außerordentlich gut wasserlöslich und reagiert dort stark basisch. In Abhängigkeit vom pH-Wert liegt es ungeladen oder protoniert vor. Die Grundstruktur von ungeladenem, linearem Polyvinylamin wird nachfolgend gezeigt.

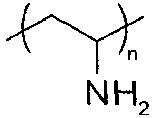

Polyelektrolyte, wie etwa Polyvinylamin, die an polymeren Trägermaterialien, wie etwa textilen Materialien, dauerhaft fixiert sind, sollten sich in Abhängigkeit vom pH-Wert zur Adsorption von ein- und zweiwertigen Metallkationen eignen.

Es wurde gefunden, dass Polyelektrolyte, die dauerhaft an textilen Trägermaterialien fixiert sind, geeignet sind, um geladene ein- und zweiwertigen Metallkationen aus wässrigen Lösungen - insbesondere aus wertmetallhaltigen Reststofflösungen - aufgrund von ionischen Wechselwirkungen bzw. Komplexbildung an der Oberfläche zu adsorbieren.

Die Erfindung betrifft die Verwendung polymerer Materialien, insbesondere textiler Materialien, mit einer dauerhaften Polyelektrolytausrüstung, die sich zur Adsorption von ein- und zweiwertigen Metallkationen aus wässrigen Lösungen eignen, zur Bindung von ein- und zweiwertigen Metallkationen.

Als polymere Materialien dienen insbesondere textile Materialien, die beim Einsatz in chemischen Prozessen aufgrund ihrer Zugänglichkeit und Durchlässigkeit Vorteile bieten. Es können im Grunde genommen beliebige Polymere eingesetzt werden, beispielsweise auch solche pflanzlicher oder tierischer Herkunft. Bevorzugt sind aber im Sinne der Erfindung synthetische Materialien, wie beispielsweise Polyester, Polyamide, Polyacrylnitrile oder Polyolefine, bzw. solche cellulosischer Natur, wie beispielsweise Baumwolle oder Viskose.

Als Polyelektrolyte eignen sich im Grunde genommen alle Substanzen, die im sauren bis neutralen pH-Wert-Bereich in der Lage sind, ein- und zweiwertige Metallkationen zu binden. Im Sinne der Erfindung sind aber insbesondere der aminofunktionalisierte Polyelektrolyt Polyvinylamin sowie dessen quartärnisierte Derivate bevorzugt.

Aminofunktionalisierte Polyelektrolyte weisen entsprechend primäre, sekundäre oder tertiäre Aminofunktionen auf. Insbesondere können die Polyelektrolyte auch quartärnisierte Ammoniumfunktionen aufweisen.

Gemäß den Vorüberlegungen sollten die aminofunktionalisierten Polyelektrolyte nach einer dauerhaften Fixierung an polymeren Trägermaterialien, insbesondere textilen Materialien, zur Adsorption von in unterschiedlichen Wässern gelösten ein- und zweiwertigen Metallkationen, wie z.B. Palladium-, Platin- und Silberkationen, genutzt werden können. Das Prinzip der Adsorption von ein- und zweiwertigen Metallkationen an aminofunktionalisierten Polymeren wird nachfolgend schematisch veranschaulicht.

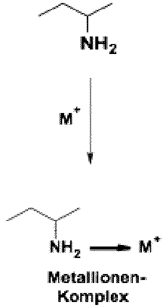

Im Allgemeinen wird bei der Durchführung der Polyelektrolytfixierung wie folgt vorgegangen: Die im Sinne der Erfindung verstandenen Polyelektrolyte verfügen über geeignete Ankergruppen oder erhalten diese durch eine zusätzliche Derivatisierung, um sie permanent, d.h. möglichst kovalent an den polymeren Trägermaterialien fixieren zu können. Dabei werden die Trägermaterialien, insbesondere Textilien, mit dem in einem geeigneten Lösemittel vorgelegten Polyelektrolyten benetzt und über einen nasschemischen, photochemischen thermischen oder quervernetzenden Prozess permanent fixiert.

Mit den erfindungsgemäß verwandten Polyelektrolyten lassen sich vor allem ein-und zweiwertige Ionen von Übergangsmetallen des Periodensystems binden, insbesondere der 1., 2. und 8. Nebengruppe. Konkret sind dies in erster Linie Kupfer, Silber, Gold, Quecksilber und die Platinmetalle. Die Bindung erfolgt insbesondere aus wässrigen Lösungen bei pH-Werten zwischen 2 und 8.

Die Erfindung wird durch das nachfolgende Beispiel näher erläutert.

Die erfindungsgemäß ausgerüsteten polymeren Trägermaterialien können auf übliche thermische, nasschemische oder photochemische Weise erzeugt werden. Der Begriff der Immobilisierung der Polyelektrolyte beinhaltet insbesondere die chemische Anbindung an das Trägermaterial. Soweit eine Umwandlung in sekundäre, tertiäre oder quartärnäre Funktionen gewünscht oder erforderlich ist, kann diese auf übliche Art und Weise herbeigeführt werden. Die Erfindung betrifft insbesondere auch die Verwendung der hier beschriebenen polymeren Trägermaterialien zur Bindung von ein- und zweiwertigen Wertmetallkationen aus wässrigen Lösungen, insbesondere aus Prozesswässern der metallverarbeitenden und chemischen Industrie.

Die entsprechend ausgerüsteten Trägersubstanzen können dazu in Filteranlagen eingebracht werden. Entsprechend ausgestattete Filter sind ebenfalls Gegenstand der Erfindung.

Die erfindungsgemäß ausgerüsteten Trägermaterialien können, nach der Beladung mit ein- und zweiwertigen Metallkationen, regeneriert werden, indem sie in beispielsweise in ein alkalisches oder stark saures Milieu überführt werden.

### Ausführungsbeispiel

Thermische Immobilisierung von Polyvinylamin an Polyester und Adsorption von ein- und zweiwertigen Metallkationen am Beispiel der Adsorption von zweiwertigen Palladiumkationen aus Prozesswässern der Leiterplattenindustrie

### A. Verwendete Materialien, Chemikalien und wertmetallhaltige Wässer

Als textiles Substrat diente ein handelsüblicher Nadelfilz aus Polyester (PET) mit einem Flächengewicht von 350 g/m² (Heimbach GmbH, Düren, D).

Als Polyelektrolyt wurde das kommerziell verfügbare Polyvinylamin (PVAm) Lupamin® 9095 Spezial (BASF, Ludwigshafen, D) verwendet.

Als Vernetzer wurde das kommerziell verfügbare Polycarbodiimid Permuthan® XR-5577 (Stahl Europe B.V., Waalwijk, NL) verwendet.

Als beispielhafte Wertmetalllösung wurde eine Palladium-haltige Reststofflösung eines Leiterplattenherstellers mit einer Palladiumkonzentration von etwa 400 mg/l und einem pH-Wert von 2,3 verwendet. Der pH-Wert der Lösung wurde mit wässriger NaOH auf 5 eingestellt.

### B. Thermische Immobilisierung von Polyvinylamin an Polyester

### B.1 ohne Quervernetzung

Technisches Lupamin® 9095 Spezial wird zu gleichen Volumenanteilen mit Wasser gemischt. Zur besseren Benetzung der textilen Materialien wird die Lösung mit 1 ml/l des nichtionischen Tensids Marlipal® 013/80 versetzt. Der pH-Wert wird mit wässriger NaOH auf pH 11 eingestellt. Die Polyvinylaminbeschichtung des Polyesterfilzes (laufende Warenbahn mit 20 cm Breite) wird in einem Foulardierprozess in einem Basecoater (Coatema Coating Machinery GmbH, Dormagen, D) bei einer Warengeschwindigkeit von 7m/h und einem Abquetschdruck von 2 bar mit nachgeschalteter Vortrocknung (120 °C) durchgeführt. Anschließend wird die beschichtete Warenbahn über 30 min bei 120 °C und 15 min bei 150 °C thermisch fixiert. Die Prozedur führt zu einer permanenten Polyvinylamin-Auflage von 14 Gew.-%.

### B.2 mit Quervernetzung

Technisches Lupamin® 9095 Spezial wird unverdünnt mit 13 ml/l Permuthan® XR-5577 gemischt. Zur besseren Benetzung der textilen Materialien wird die Lösung mit 1 ml/l des nichtionischen Tensids Marlipal® 013/80 versetzt. Der pH-Wert wird mit wässriger NaOH auf pH 11 eingestellt. Die Polyvinylaminbeschichtung des Polyesterfilzes (laufenden Warenbahn mit 20 cm Breite) wird in einen Foulardierprozess in einem Basecoater (Coatema Coating Machinery GmbH, Dormagen, D) bei einer Warengeschwindigkeit von 7m/h und einem Abquetschdruck von 2 bar mit nachgeschalteter Vortrocknung (120 °C) durchgeführt. Anschließend wird die beschichtete Warenbahn über 30 min bei 120 °C und 15 min bei 150 °C thermisch fixiert. Die Prozedur führt zu einer permanenten Polyvinylamin-Auflage von 30 Gew.-%.

### C. Palladiumadsorption

### C.1 Diskontinuierliche Palladiumadsorption

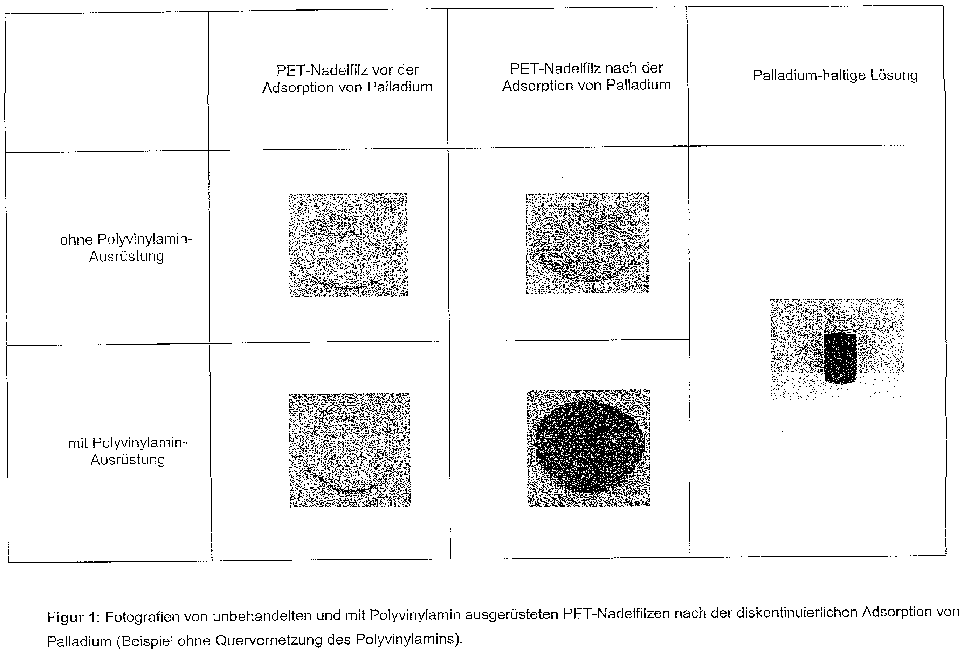

Polyvinylamin-ausgerüstete PET-Nadelfilze wurden für 15 min in die Palladium-haltige Lösung eingelegt. Abbildung 1 zeigt Fotografien der erfolgreichen Adsorption von Palladium an dem Polyvinylamin-ausgerüsteten Textil im Vergleich zur nicht behandelten Blindprobe.

### C.2 Kontinuierliche Palladiumadsorption

Eine Glaskolonne wurde mit dem 20 g Polyvinylamin-ausgerüsteten PET-Nadelfilz bestückt. Anschließend wurden 700 ml der Palladium-haltigen Lösung über die Filterapparatur gepumpt (Pumpleistung 12 ml/min). Die Metallkonzentrationen der Lösung wurden vor und nach der kontinuierlichen Filtration quantitativ mittels ICP-OES bestimmt.

Tabelle 1 zeigt die quantitativen Analyseergebnisse.

**Tabelle 1: Metallkonzentrationen des Palladium-haltigen Prozesswassers vor und nach einer kontinuierlichen Filtration über Polyvinylamin-ausgerüsteten PET-Nadelfilz (Beispiel mit Quervernetzung des Polyvinylamins).**

| Metall | Konzentration Start [mg/l] | Konzentration nach Filtration [mg/l] | rel. Änderung [%] |
|---|---|---|---|
| **Pd** | **408,0** | **0,57** | **- 99,9** |
| Pt | 0,03 | 0 | - 100 |
| Cu | 60,0 | 0,13 | - 99,8 |
| Ni | 0,16 | 0,05 | - 68,8 |
| Ca | 45,4 | 55,7 | 0 |
| Mg | 2,2 | 2,3 | 0 |

Dementsprechend kann Palladium im leicht sauren pH-Wert-Bereich von 5 mit den Polyvinylamin-ausgerüsteten PET-Nadelfilzen im Sinne der Erfindung nahezu vollständig an dem Trägermaterial adsorbiert werden. Des Weiteren wurde eine hohe Abtrennleistung für weitere Nebengruppenmetalle beobachtet, wohingegen die Erdalkalimetalle Calcium und Magnesium nicht gebunden werden. Calcium und Magnesium treten häufig in metallhaltigen wässrigen Lösungen als Störionen auf.

## Patentansprüche

1. Verwendung eines polymeren Trägermaterials mit einer Ausrüstung von daran fixierten Polyelektrolyten, das geeignet ist, ein- und zweiwertige Metallkationen zu adsorbieren, zur Bindung von ein- oder zweiwertigen Metallkationen aus wässrigen Lösungen.

2. Verwendung nach Anspruch 1, **dadurch gekennzeichnet, dass** die Trägermaterialien textile Materialien sind.

3. Verwendung nach Anspruch 1 oder 2, **dadurch gekennzeichnet, dass** die Trägermaterialien textile Flächengebilde sind.

4. Verwendung nach einem der vorstehenden Ansprüche, **dadurch gekennzeichnet, dass** die Polyelektrolyte an textilen Flächengebilden aus Polyester, Polyamid, Polyacrylnitril, Baumwolle oder Viskose immobilisiert sind.

5. Verwendung nach einem der vorstehenden Ansprüche, **dadurch gekennzeichnet, dass** die Polyelektrolyte amin- oder ammoniumfunktionalisiert sind.

6. Verwendung nach Anspruch 5, **dadurch gekennzeichnet, dass** die Polyelektrolyte quartärnisierte Ammoniumfunktionen enthalten.

7. Verwendung nach einem der vorstehenden Ansprüche, **dadurch gekennzeichnet, dass** die immobilisierten Polyelektrolyte Polyvinylamin, Polyvinylguanidin, Polyalkylamin, Polyallylguanidin oder Chitosan sowie ihre quartärnisierten Derivate sind.

8. Verwendung nach einem der Ansprüche 1 bis 7, **dadurch gekennzeichnet, dass** die ein- und zweiwertigen Metallkationen Wertmetallkationen sind, insbesondere ausgewählt aus der ersten, zweiten und achten Nebengruppe des Periodensystems.

9. Verwendung nach einem der vorstehenden Ansprüche, **dadurch gekennzeichnet, dass** die Metallionen Silber, Palladium oder Platinionen sind.

10. Verwendung nach einem der Ansprüche 1 bis 9, **dadurch gekennzeichnet, dass** die Bindung im wässerigen Medium bei einem pH-Wert < 8 erfolgt.

11. Verwendung polymerer Trägermaterialien nach einem der Ansprüche 1 bis 10 zur Herstellung von Filtern zur Adsorption von ein- und zweiwertigen Metallkationen.

## Claims

1. Use of a polymeric carrier material provided with polyelectrolytes fixed thereon, adapted for the adsorption of mono- or bivalent metal cations for bonding mono- or bivalent metal cations from an aqueous solution.

2. Use according to claim 1, **characterized in that** the carrier materials are textile materials.

3. Use according to claim 1 or 2, **characterized in that** the carrier materials are textile fabrics.

4. Use according to any one of the previous claims, **characterized in that** the polyelectrolytes are immobilized on textile fabrics made of polyester, polyamide, polyacrylnitrile, cotton or viscose.

5. Use according to any one of the previous claims, **characterized in that** the polyelectrolytes are amine- or ammonium functionalized.

6. Use according to claim 5, **characterized in that** the polyelectrolytes comprise a quarternized ammonium function.

7. Use according to any one of the previous claims, **characterized in that** the immobilized polyelectrolytes are polyvinylamine, polyvinylguanidine, polyalkylamine, polyallylguanidin or chitosan as well as their quarternized derivatives.

8. Use according to any one of the previous claims 1 to 7, **characterized in that** the mono- or bivalent metal cations are cations of noble metals selected in particular from the first, second and eighth subgroup of the periodic table.

9. Use according to any one of the previous claims, **characterized in that** the metal ions are silver, palladium or platin ions.

10. Use according to any one of the previous claims 1 to 9, **characterized in that** the bonding in an aqueous solution occurs at a pH value < 8.

11. Use of carrier materials according to any one of the previous claims 1 to 10 for the manufacturing of filters for the adsorption of mono- or bivalent metal cations.

## Revendications

1. Utilisation d'un matériau support polymère sur lequel sont fixés des polyélectrolytes, qui est approprié pour adsorber des cations métalliques mono-et bivalents, pour la liaison de cations métalliques mono- ou bivalents à partir de solutions aqueuses.

2. Utilisation selon la revendication 1, **caractérisée en ce que** les matériaux supports sont des matériaux textiles.

3. Utilisation selon la revendication 1 ou 2, **caractérisée en ce que** les matériaux supports sont des structures textiles plates.

4. Utilisation selon l'une quelconque des revendications précédentes, **caractérisée en ce que** les polyélectrolytes sont immobilisés sur des structures textiles plates en polyester, polyamide, polyacrylonitrile, coton ou viscose.

5. Utilisation selon l'une quelconque des revendications précédentes, **caractérisée en ce que** les polyélectrolytes sont fonctionnalisés par des amines ou de l'ammonium.

6. Utilisation selon la revendication 5, **caractérisée en ce que** les polyélectrolytes contiennent des fonctions ammonium quaternisées.

7. Utilisation selon l'une quelconque des revendications précédentes, **caractérisée en ce que** les polyélectrolytes immobilisés sont la polyvinylamine, la polyvinylguanidine, la polyalkylamine, la polyallylguanidine ou le chitosan, ainsi que leurs dérivés quaternisés.

8. Utilisation selon l'une quelconque des revendications 1 à 7, **caractérisée en ce que** les cations métalliques mono- et bivalents sont des cations de métaux de valeur, notamment choisis dans le premier, le deuxième et le huitième groupe de transition du tableau périodique.

9. Utilisation selon l'une quelconque des revendications précédentes, **caractérisée en ce que** les ions métalliques sont des ions argent, palladium ou platine.

10. Utilisation selon l'une quelconque des revendications 1 à 9, **caractérisée en ce que** la liaison dans le milieu aqueux a lieu à un pH < 8.

11. Utilisation de matériaux supports polymères selon l'une quelconque des revendications 1 à 10 pour la fabrication de filtres pour l'adsorption de cations métalliques mono- et bivalents.
